Europäisches Patentamt

European Patent Office

Office européen des brevets

(11) Publication number: **0 096 928**
**A1**

## EUROPEAN PATENT APPLICATION

(21) Application number: **83200812.2**

(22) Date of filing: **06.06.83**

(51) Int. Cl.³: **G 02 C 5/22**

(30) Priority: **16.06.82 IT 3487682 U**

(43) Date of publication of application: **28.12.83**
**Bulletin 83/52**

(84) Designated Contracting States: **AT BE CH DE FR GB IT
LI LU NL SE**

(71) Applicant: **COMET S.p.A., 154, Via Roma, I-46069 Volta
Mantovana (Mantova) (IT)**

(72) Inventor: **Pozzi, Sergio, 9, Viale Risorgimento,
I-46049 Volta Mantovana (Mantova) (IT)**

(74) Representative: **Corradini, Corrado, 4, Via Sessi,
I-42100 Reggio Emilia (IT)**

(54) **Elastic hinge for spectacle arms.**

(57) An elastic hinge for spectacle arms, comprising two hinge elements (3, 11) articulated on an axis (10) and associated with the frame (1) and with an arm (4) respectively, the first hinge element (3) having a cam profile (5, 6, 7, 8) provided with two dead points (5, 7) for stable positioning of the arm (4), and against which there is elastically urged a roller (18) idly mounted on a slidable piston (14), of which the extent of rearward travel is selected by means of an axially adjustable rear push rod (21, 22).

ELASTIC HINGE FOR SPECTACLE ARMS

This industrial utility model patent relates to an improved elastic hinge for spectacle arms, of the type which enables the corresponding arm to occupy two stable positions relative to the frame or front, namely practically parallel to this latter or closed, and substantially orthogonal thereto or open, together with a third unstable position in which the arm has diverged elastically outwards from its open position.

Various types of elastic hinge of this kind are currently known, which have been designed especially to give the necessary springiness to the arms when these latter are constructed of a rigid or substantially rigid material, or are of stiffened type.

Known elastic hinges comprise a cam-shaped hinge element fixed to the frame or bar, and a hinge element provided on the frame or bar and arranged to slide on said cam, against which it is elastically urged.

In known types of elastic hinge, said slidable hinge element is sometimes in the form of a spherical body such as a metal ball, while at other times it is constituted by a substantially spherical body such as a push rod with its free end of spherical cap configuration.

In contrast, the hinge element which acts as a cam comprises two dead points which are occupied by the other hinge element in order to fix the "closed" and "open" positions of the respective arm, and beyond the dead point which corresponds to this latter position the cam comprises an eccentric portion arranged to allow the elastic divergence of the arm outwards from its stable open position.

Said known elastic hinges are of widespread use, and it has been found that they wear rapidly, in particular at the cam profile, and that with the passage of time it becomes extremely difficult, in spite of the presence of the spring, to automatically move the hinge from one stable position to the other after passing beyond the corresponding dead point.

This is due on the one hand to the fact that said spherical body or substantially spherical body slides on the cam profile, and on the other hand to the fact that the zone of contact between the spherical or substantially spherical body and the cam profile is substantially point-like, and thus very restricted.

In this respect, even with the metal ball, it is very difficult to make it roll along the cam profile, as it is hindered or retained by the last flat turn of the spring which makes contact with it over a circular zone which is much greater than the aforesaid zone of point contact.

Moreover, in order to halt the arm in a diverged position, from which it can automatically return to its open position, such known hinges require very precise machining and/or very small tolerances, with all the implications thereof.

Furthermore, in these elastic hinges the central articulation zone thereof is usually visible when the arm is open, leading to a poor appearance.

The present patent provides and protects an elastic hinge of improved type which is able to obviate the aforesaid drawbacks in that on the one hand the hinge element disposed in contact with the cam rolls thereon, and on the other hand the halt position of the diverged arm can be chosen by means of a movable stop element, all by means of a simple, rational and extremely reliable design.

According to the invention this is attained by disposing a cylindrical body such as a roller transversely to the cam profile, against which it constantly rests, and which is rotatably mounted on a convenient support slidably inserted in a respective seat of the compartment which contains the spiral thrust spring.

In this manner, a contact of linear type is attained between the cylindrical body and the cam profile, and said cylindrical body rolls on said cam profile, which means that the soundness of the cam profile during the course of time is safeguarded, and automatic passage of the cylindrical body from one stable position to the other after overcoming the corresponding previously occupied dead point is ensured.

In addition, concentrically to the spiral thrust spring there is disposed a push rod which is adjustable along the compartment which contains said spring, and is arranged to ensure stoppage of the arm in a diverged position from which it can automatically return to its open position, this being attained without requiring careful or precise machining of the component elements of the hinge.

These and further merits and constructional and operational characteristics of the invention will be more apparent from the detailed description given hereinafter with reference to the figures of the accompanying drawings in which:

Figure 1 is a longitudinal section through the hinge taken orthogonally to said cylindrical rolling body, the same figure also showing, by dashed and double dotted lines, the folded position of the hinge, which corresponds to the "closed" position of the respective arm;

Figure 2 is a section on the line II-II of Figure 1;

Figure 3 is a section on the line III-III;

Figure 4 shows the invention in its unstable position of maximum outward elastic divergence beyond the "open" arm position.

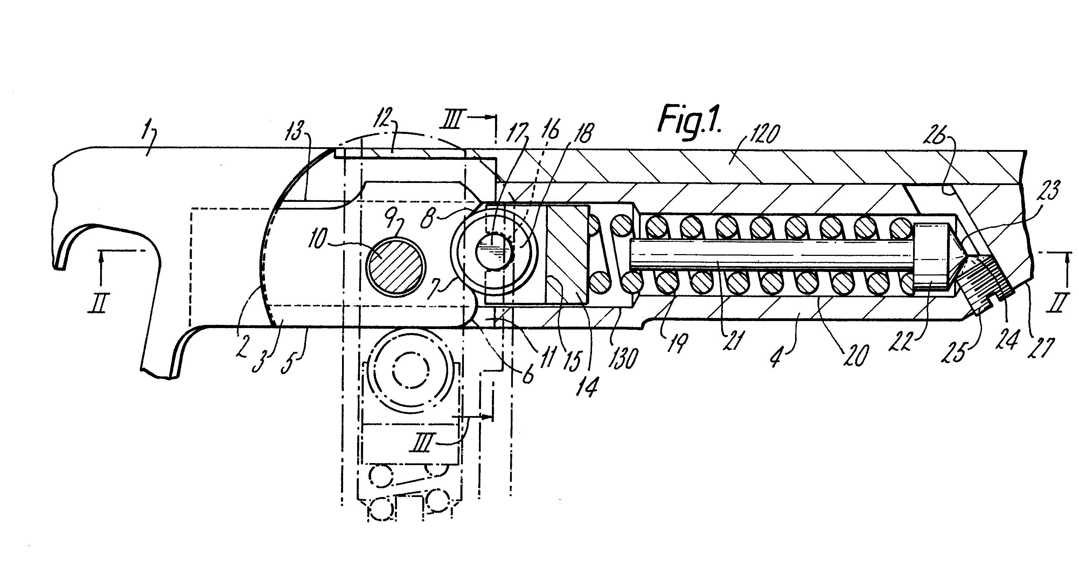

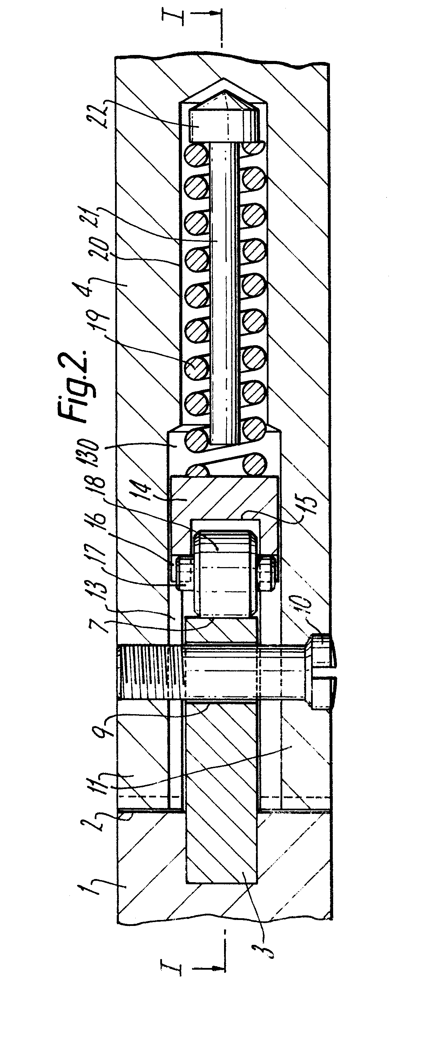

Said figures, and in particular Figures 1 and 2, show a connection member 1 which, in known manner, branches from the rear zone of one of the upper lateral edges of a normal spectacle frame, not shown.

In the illustrated example, said connection member 1 is the right hand member, obviously when observing the frame from the side on which the spectacles are worn.

The connection member 1 may be formed from a synthetic, metal or any other suitable material.

From the free end of the connection member 1, which has an arcuate concave profile 2, there branches a central plate 3, of which the thickness is practically one third of the corresponding dimension of the body 1 (Figure 2).

The plate 3 lies in the swivel plane of the corresponding arm or bar 4, and can be formed from the same material as the connection member 1, or can be in the form of a metal insert which is embedded into the material of this latter as shown in Figure 1, or which is conveniently fixed thereto.

The plate 3 has a width less than the corresponding dimension of the connection member 1, and is offset from this latter such that its inner edge 5 (Figure 1) is coplanar with the inner face of the connection member 1.

The front transverse edge of the plate 3 is of a sinuous pattern comprising a convex portion in the form of a circumferential arc 6 which connects to said inner edge 5, a concave circumferential arc portion 7 which connects to said first portion 6, and a terminal portion 8 which is also convex.

Orthogonally to the plate 3 there is provided a through bore 9 into which the shank of a hinge screw 10 for the arm 4 is inserted.

The connection end of this latter comprises a forked member of which the arms 11 straddle the plate 3, and are respectively provided with a transverse through bore and a threaded through bore for receiving and fixing the opposing ends of said hinge screw or pin 10 (Figure 2).

Said Figures 1 and 2 also show that said connection end of the arm 4 has a configuration conjugate to that of the free end 2 of the connection member 1.

Moreover, at least the connection end of the arm 4 has a cross-section of which the outer perimetral extension is practically equal to that of the cross-sectio of the connection member 1.

Furthermore, the outer lateral mouth of the fork 11 is closed by a masking wall 12 (Figure 1), which completely covers the central articulation zone of the hinge when the arm 4 is in its open position, perfectly aligned with the connection member 1 or substantially orthogonal to the frame.

The wall 12 branches from a strip 120 which covers the outer face of the arm 4, but said wall can also be integral with this latter.

Between the arms of the fork 11, and in a position slightly offset from their longitudinal central line, there is a cylindrical seat 13 which terminates beyond the cross-member or connection base of the fork 11 to form a guide and sliding chamber 130 for a cylindrical piston 14.

This latter is provided frontally with a deep wide transverse diametrical cut 15 which defines in it a fork parallel to the aforesaid fork 11.

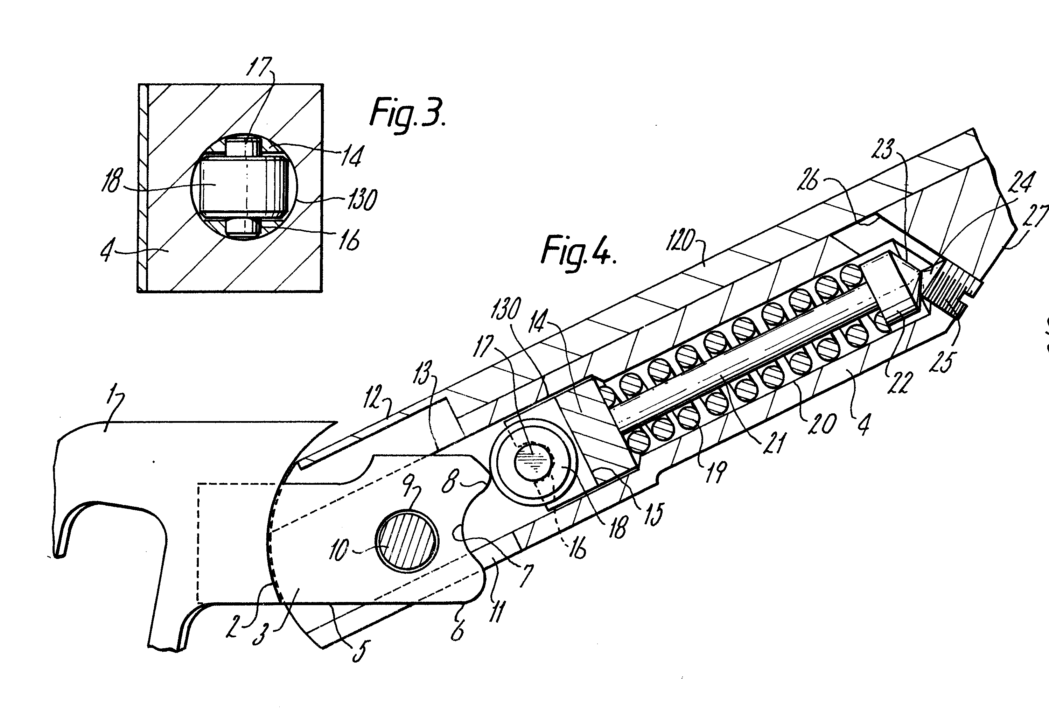

The free ends of the arms of the fork of the piston 14 are each provided with a central transverse recess 16 in which there is rotatably mounted the corresponding free end of a pin 17 pertaining to a roller 18, as also shown in Figure 3.

As can be better seen from Figure 1, the recess 16 is of polyhedral form to limit friction.

The roller 18 can either be keyed on to the pin 17 or be rotatably mounted thereon.

In the illustrated example, the pin 17 is in the form of two coaxial end stems deriving from the opposing faces of the roller 18 (Figures 2 and 3).

The roller 18 is inserted into the fork of the piston 14, from which it partially emerges to make contact, by means of its frontal generating lines, with the inner edge 5 and frontal edge 6, 7, 8 of the plate 3 during the swivel movements of the arm or bar 4.

The roller 18 is constantly pressed elastically against said plate by a spiral compression spring 19 housed in a cylindrical cavity 20, which is coaxial with said slide and guide chamber 130.

Coaxially to the thrust spring 19 there is provided a push rod 21, of which the front end lies slightly beyond the base of the slide chamber 130 in order to thus form a stop element for the piston 14 when the bar 4 is in its unstable position of maximum elastic outward divergence as shown in Figure 4.

The other end of the push rod 21 has a widened head 22, against which the thrust spring 19 rests, and which terminates in a conical portion 23.

Against this latter there rests the corresponding conical point 24 of a grub screw 25, which is screwed into an oblique threaded bore 26 provided orthogonally to a reentering inclined surface 27 provided on the inner face of the arm 4.

The grub screw 25 enables the operating position of the free end of the push rod 21 to be adjusted in order to prevent the roller 18 from passing beyond the convex terminal portion 8 of the plate 3.

This adjustment is very advantageous in that it means that extremely precise or careful machining of the piston 14, the respective slide chamber 130 and the push rod 21 is not required.

The contacting parts of said push rod and grub screw can be of hemispherical shape.

Finally, it should be noted that the positions of the roller 18 and plate 3 can be the reverse of those shown.

The operation of the invention is easily understood from the aforegoing, and from a simple examination of the accompanying figures.

Specifically, Figure 1 shows the stable open position and the stable closed position of the arm 4 by continuous lines and by dashed and double dotted lines respectively.

In contrast, Figure 4 shows the unstable position of maximum outward divergence of the arm 4, ie beyond its stable open position.

From the aforegoing, it is also apparent that the soundness and correct operation of the said elastic hinge with time are on the one hand ensured by the fact that the roller rolls on the cam profile of the plate, and on the other hand by the fact that between said cam profile and roller there is a relatively large zone of contact.

PATENT CLAIMS

1.    An elastic hinge for spectacle arms, of the type comprising a first (3) and a second (11) hinge element articulated about a common axis (10) and respectively associated with the frame (1) and with an arm (4) or viceversa, and which cooperate with each other, the former (3) possessing a cam profile (5, 6, 7, 8) provided with two dead points (5, 7) for the stable closure and stable opening of the corresponding arm (4) respectively, and with a salient portion (8) arranged to allow the elastic divergence of the arm (4) beyond its open position, characterised in that the second hinge element (11) is provided with an idle roller (18) with its axis (17) parallel to the articulation axis (10) of the hinge, and disposed constantly in contact with the cam profile (5, 6, 7, 8), on which it rolls during the swivel movements of the arm (4), and is rotatably disposed at the head of a slidable piston (14) housed in the second hinge element (11) and elastically urged towards the cam profile (5, 6, 7, 8) by a rear spiral compression spring (19), into which there is inserted an axially adjustable push rod (21, 22) arranged to act as a stop for the piston (14) in its retracted position, which corresponds to the position of maximum elastic outward divergence of the arm (4).

2.    An elastic hinge as claimed in claim 1, characterised in that in the head of said slidable piston (14) there is provided a transverse diametrical cut (15) which houses the roller (18), and in the lateral walls of which there are suitable seats (16) for receiving the axle (17) thereof.

3.    An elastic hinge as claimed in claim 2, characterised in that said seats for the axle (17) of the roller (18) have a polyhedral configuration (16) arranged to minimise the points of contact and thus the friction.

4.    An elastic hinge as claimed in claim 1, characterised in that the generating lines of the roller (18) have a length practically equal to the width of the cam profile (5, 6, 7, 8).

5. A hinge as claimed in claim 1, characterised in that said push rod comprises a rod (21), of which the free end extends at least as far as the point of maximum retraction of the piston (14), while its other end comprises a widened head (22) against which the spring (19) acts, and which terminates in a tapered portion.

6. A hinge as claimed in claim 1, characterised in that the axial adjustment of said push rod (21, 22) is effected by a grub screw (25) which is screwed obliquely into the arm (4), and makes contact with said tapered portion (22) of the push rod (21).

Fig.1.

Fig.2.

Fig.3.

Fig.4.

3/3

0096928

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | CH-A- 349 425 (RIVO S.A.)<br>* Whole document * | 1,5 | G 02 C 5/22 |
| A | FR-A-2 334 808 (A. ZWAHLEN)<br>* Whole document * | 1,5 | |
| A | EP-A-0 006 075 (LA NATIONAL)<br>* Page 2, lines 16-31; page 3, lines 1-28; figure 1 * | 1,5 | |
| A | US-A-3 644 023 (L. VILLANI)<br>* Column 3, lines 21-53; claim 1; figures 2-6 * | 1,6 | |

---

**TECHNICAL FIELDS SEARCHED (Int. Cl. 3)**

G 02 C

The present search report has been drawn up for all claims

| Place of search<br>THE HAGUE | Date of completion of the search<br>15-09-1983 | Examiner<br>SEIFERT H.U. |
|---|---|---|